Europäisches Patentamt

European Patent Office

Office européen des brevets

(11) Numéro de publication: **0 412 885 A1**

# DEMANDE DE BREVET EUROPEEN

(21) Numéro de dépôt: **90402233.2**

(22) Date de dépôt: **03.08.90**

(51) Int. Cl.⁵: **G01M 1/16**

(30) Priorité: **08.08.89 FR 8910650**

(43) Date de publication de la demande:
**13.02.91 Bulletin 91/07**

(84) Etats contractants désignés:
**DE ES GB IT**

(71) Demandeur: **ETABLISSEMENTS M. MULLER & CIE.**
**2, Avenue de la Trentaine Zone Industrielle**
**F-77500 Chelles(FR)**

(72) Inventeur: **Moniot, Jacques**
**6 rue de la Marne**
**F-94500 Champigny-sur-Marne(FR)**

(74) Mandataire: **Tony-Durand, Serge**
**Cabinet Tony-Durand 77, rue Boissière**
**F-75116 Paris(FR)**

(54) **Appareil pour la détection du balourd d'une roue d'automobile en vue de l'équilibrage de celle-ci, et capteur potentiométrique destiné à équiper un tel appareil.**

(57) Cet appareil comporte un arbre horizontal (3a) rotatif à l'intérieur d'un fourreau (4a) de maintien. A son extrémité opposée au plateau de fixation d'une roue à contrôler, ce fourreau se prolonge au-delà du roulement correspondant (5a) par une partie (5b) à l'intérieur de laquelle sont disposées deux pièces distinctes aptes à constituer le stator et le rotor du capteur potentiométrique de l'appareil. Le stator consiste en une pièce circulaire (25), fixée dans le prolongement (4b) du fourreau (4a) et dont le diamètre correspond au diamètre interne de celui-ci pour se trouver centrée sur l'axe de ce fourreau. Quant au rotor, il est constitué par un manchon (23) emboîté et centré sur l'extrémité correspondante (11a) de l'arbre rotatif (3a), ce manchon étant engagé avec jeu à l'intérieur d'une ouverture centrale prévue dans la pièce (25) formant stator. Les pistes résistives et les contacts correspondants du potentiomètre étant prévus sur des surfaces en regard, appartenant respectivement à ce manchon (23) et à la pièce (25) formant stator.

Le présent appareil est destiné à être utilisé pour détecter le balourd d'une roue.

FIG. 4

# APPAREIL POUR LA DÉTECTION DU BALOURD D'UNE ROUE D'AUTOMOBILE EN VUE DE L'ÉQUILIBRAGE DE CELLE-CI, ET CAPTEUR POTENTIOMÉTRIQUE DESTINÉ À ÉQUIPER UN TEL APPAREIL

La présente invention est relative aux appareils utilisés pour détecter l'importance et la position du balourd d'une roue d'automobile en vue d'équilibrer celle-ci par adjonction d'une masselotte appropriée. Plus précisément, elle concerne les appareils conçus pour contrôler des roues d'automobiles après démontage préalable de celles-ci.

Il s'agit donc d'appareils du type de celui faisant l'objet du brevet FR 2.619.214. L'appareil décrit dans ce brevet comporte un arbre horizontal rotatif à l'intérieur d'un fourreau de maintien monté sur son support avec interposition de ressorts et de capteurs piezo-électriques permettant de détecter le balourd d'une roue lors de l'entraînement de celle-ci en rotation avec l'arbre de l'appareil. A cet effet, l'une des extrémités de cet arbre porte un plateau destiné à recevoir la roue à contrôler, cependant qu'il est par ailleurs prévu des moyens permettant d'entraîner l'ensemble en rotation. Enfin, l'arbre rotatif de l'appareil est associé à un capteur potentiométrique destiné à contrôler sa vitesse de rotation ainsi que sa position angulaire lors de la détection d'un balourd sur une roue.

Actuellement, on utilise à cet effet des capteurs potentiométriques constitués par de petits appareils fabriqués indépendamment et qui se suffisent en quelque sorte à eux-mêmes. En effet, ces appareils sont destinés à pouvoir être rapportés sur l'extrémité correspondante de l'arbre rotatif par simple emboîtement sur cette extrémité, leur boîtier étant immobilisé en rotation par accrochage ou accouplement sur l'extrémité respective du fourreau de maintien de cet arbre.

Toutefois de tels capteurs potentiométriques ont l'inconvénient d'être coûteux, en raison même de leur conception. En effet, pour que leur fonctionnement soit satisfaisant, il est nécessaire qu'il y ait une parfaite co-axialité entre le rotor emboîté sur l'extrémité de l'arbre rotatif et le stator formé par le boîtier externe de l'appareil. Ceci impose donc à la fois un usinage très précis des diverses pièces qui doivent être centrées les unes par rapport aux autres, ainsi que la présence de roulements internes qui grèvent évidemment le prix de revient.

C'est pourquoi la présente invention a pour objet un appareil de détection du type en cause dans lequel il est prévu, à la place d'un capteur potentiométrique de type classique, des moyens de détection à effet potentiométrique qui sont complètement intégrés dans cet appareil de façon à éliminer complètement les inconvénients exposés précédemment.

A cet effet, le présent appareil de détection du balourd d'une roue est caractérisé en ce qu'à son extrémité opposée au plateau de fixation d'une roue à contrôler, le fourreau de maintien de l'arbre rotatif se prolonge au-delà du roulement correspondant par une partie à l'intérieur de laquelle sont disposées deux pièces distinctes aptes à constituer le stator et le rotor du capteur potentiométrique de l'appareil, en l'occurrence :

- une pièce circulaire, fixée à l'intérieur du prolongement du fourreau et dont le diamètre correspond au diamètre interne de celui-ci pour se trouver centrée sur l'axe de ce fourreau,
- un manchon emboîté et centré sur l'extrémité correspondante de l'arbre rotatif, ce manchon étant engagé avec jeu à l'intérieur d'une ouverture centrale prévue dans la pièce formant stator,
- les pistes résistives et les contacts correspondants du potentiomètre étant prévus sur des surfaces en regard, prévues respectivement à ce manchon et à la pièce formant stator.

Grâce à un tel agencement, les pièces constituant le capteur potentiométrique n'ont plus besoin d'un usinage précis pour être convenablement centrées l'une par rapport à l'autre. En effet, ce centrage est automatiquement obtenu par le fait que le stator est centré sur le fourreau de maintien de l'arbre rotatif alors que le rotor est lui-même centré sur cet arbre, ce qui assure indirectement la co-axialité nécessaire. C'est la raison pour laquelle il n'est pas prévu de roulements intermédiaires entre ces deux pièces. Du reste, dans le cas présent les roulements, existant normalement entre l'arbre rotatif et son fourreau de maintien, jouent le rôle de tels roulements intermédiaires. Ceci permet donc une simplification importante du capteur potentiométrique et une réduction considérable du prix de revient de celui-ci.

Dans une forme de réalisation avantageuse, le manchon interne rotatif du capteur potentiométrique porte une collerette qui est disposée en regard d'un disque évidé constituant le stator de ce capteur, les pistes résistives et les contacts correspondants du potentiomètre étant prévus sur les surfaces en regard de cette collerette et de ce disque.

Selon une autre caractéristique de cette forme de réalisation avantageuse, le capteur comporte en outre un boîtier externe en forme de cuvette évidée, à l'intérieur duquel est disposée la collerette portée par le manchon interne rotatif, auquel cas le disque constituant le stator forme un couvercle pour ce boîtier.

Cependant d'autres particularités et avantages de l'appareil selon l'invention, et du capteur potentiométrique prévu dans celui-ci, apparaîtront au cours de la description suivante. Celle-ci est donnée en référence au dessin annexé à simple titre indicatif, et sur lequel :

La figure 1 est une vue en perspective d'un appareil de détection de type connu.

La figure 2 est une vue partielle en coupe verticale selon la ligne transversale II-II de la figure 1.

La figure 3 est une vue partielle en coupe selon le plan III-III de la figure 2, laquelle représente l'extrémité de l'appareil où est prévu le capteur potentiométrique.

La figure 4 est une vue similaire à la figure 3 mais qui représente l'extrémité correspondante d'un appareil de détection selon l'invention, laquelle comporte donc des moyens de détection à effet potentiométrique qui sont intégrés aux organes de cet appareil, et non pas un capteur distinct.

La figure 5 est une vue de face des pistes résistives portées par l'une des pièces constituant le capteur potentiométrique selon l'invention.

La figure 6 est une vue en coupe axiale des pièces constituant un tel capteur.

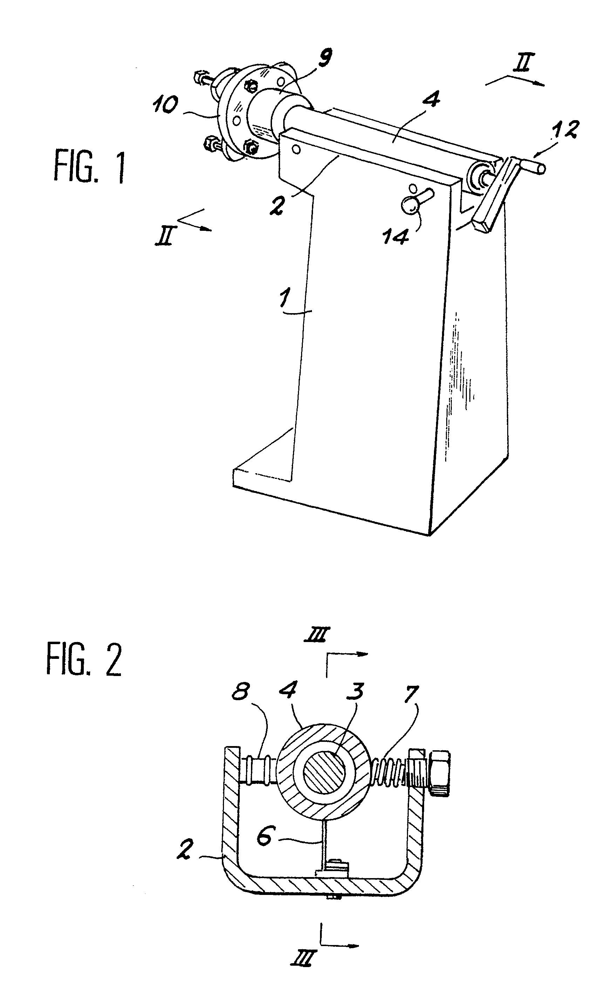

Comme indiqué ci-dessus, les figures 1 à 3 représentent un appareil de détection de type connu. Cet appareil comporte un bâti 1 dont l'extrémité supérieure porte un berceau fixe 2 servant de support à l'arbre rotatif 3 de cet appareil. Cet arbre est monté librement rotatif, à l'intérieur d'un fourreau horizontal 4 de maintien, et ce par l'intermédiaire de roulements 5 d'extrémité.

Le fourreau 4 est porté par les extrémités supérieures de deux lames élastiques 6 disposées au-dessous de celui-ci dans le plan vertical III-III passant par l'axe de ce fourreau. Ces deux lames sont disposées respectivement près de l'une et l'autre extrémités dudit fourreau et elles sont fixées, à leur pied, contre le fond du berceau 2.

De part et d'autre du fourreau 4 de maintien de l'arbre 3, il est prévu des ressorts 7 et des capteurs piézo-électriques 8 qui sont interposés entre ce fourreau et les ailes verticales correspondantes du berceau 2. Sur un côté du fourreau 4, il existe ainsi deux capteurs piézo-électriques 8 disposés respectivement près de l'une et l'autre extrémités de l'ensemble, et en regard de chacun de ces capteurs il est prévu un ressort 7. Les capteurs piézo-électriques 8 sont branchés dans un circuit électrique de mesure permettant de déterminer l'importance des oscillations du fourreau 4 dans le plan horizontal lorsqu'une roue à contrôler est entraînée en rotation avec l'arbre 3. Ceci permet donc de détecter l'existence éventuelle du balourd de cette roue.

Pour la fixation de celle-ci sur l'arbre 3, l'une des extrémités de ce dernier porte une cloche 9 présentant une collerette 10 destinée à servir de plateau de fixation d'une roue. Quant à l'extrémité opposée 11 de l'arbre 3, elle est pourvue d'une manivelle 12 permettant son entraînement à la main. De plus, il est prévu un dispositif de friction 13 susceptible d'être actionné au moyen d'une manette de commande 14 pour freiner la rotation de l'ensemble. Ce dispositif de friction est situé à l'extrémité 11 de l'arbre 3 sur laquelle est fixée la manivelle d'entraînement 12.

Le présent appareil est équipé d'un capteur potentiométrique 15 qui est destiné d'une part à contrôler la vitesse de rotation de l'arbre 3 et d'autre part à déterminer sa position angulaire lors de la détection d'un balourd sur la roue fixée sur cet arbre. Dans le cas du dispositif connu représenté aux figures 1 à 3, ce capteur potentiométrique constitue en lui-même un appareil distinct, fabriqué indépendamment et pouvant se suffire à lui-même. Cet appareil est conçu de façon à pouvoir être emboîté sur l'extrémité 11 de l'arbre 3, son boîtier extérieur 15 étant par ailleurs immobilisé en rotation au moyen d'une barre d'attelage 16 fixée sur l'extrémité correspondante du fourreau 4.

Toutefois il s'agit là d'une solution coûteuse car un capteur potentiométrique de ce genre est relativement complexe et doit comporter des roulements intérieurs, ce qui grève son prix de revient.

En effet un tel capteur comporte un manchon interne 17 constituant le rotor de cet appareil, cependant que son stator est constitué par le boîtier externe 15. Ce manchon est destiné à être emboîté sur la partie terminale de l'extrémité 11 de l'arbre 3, pour être centré sur cet arbre. Ce manchon porte une bague 18 qui sert de support à plusieurs lames de contact 19 disposées contre les pistes résistives 20 du potentiomètre correspondant, ces dernières étant prévues sur la paroi cylindrique interne du boîtier 15 de celui-ci.

Pour qu'un tel appareil soit en état de fonctionner, il est nécessaire d'assurer une parfaite coaxialité du boîtier cylindrique 15 et du manchon 17 portant la bague 18 servant de support aux lames de contact. C'est la raison pour laquelle deux roulements 21 sont interposés entre ces deux pièces, ou plus exactement entre le manchon interne rotatif 17 et une couronne métallique 22 solidaire du boîtier 15, celui-ci pouvant être réalisé par surmoulage en matière plastique sur cette couronne.

Comme on le comprend aisément, un tel capteur potentiométrique est relativement onéreux, ne serait-ce qu'en raison de la nécessité d'un usinage précis des pièces qui doivent être centrées les unes par rapport aux autres, ainsi que la présence des roulements internes 21. Cependant, comme exposé précédemment, cet usinage précis et ces roulements sont absolument indispensables pour obtenir une parfaite coaxialité du stator constitue par le boîtier 15 et du rotor formé par le manchon interne 17, étant donné que l'ensemble de l'appareil est simplement centré sur une seule surface, en l'occurrence celle de l'extrémité 11 de l'arbre rotatif 3.

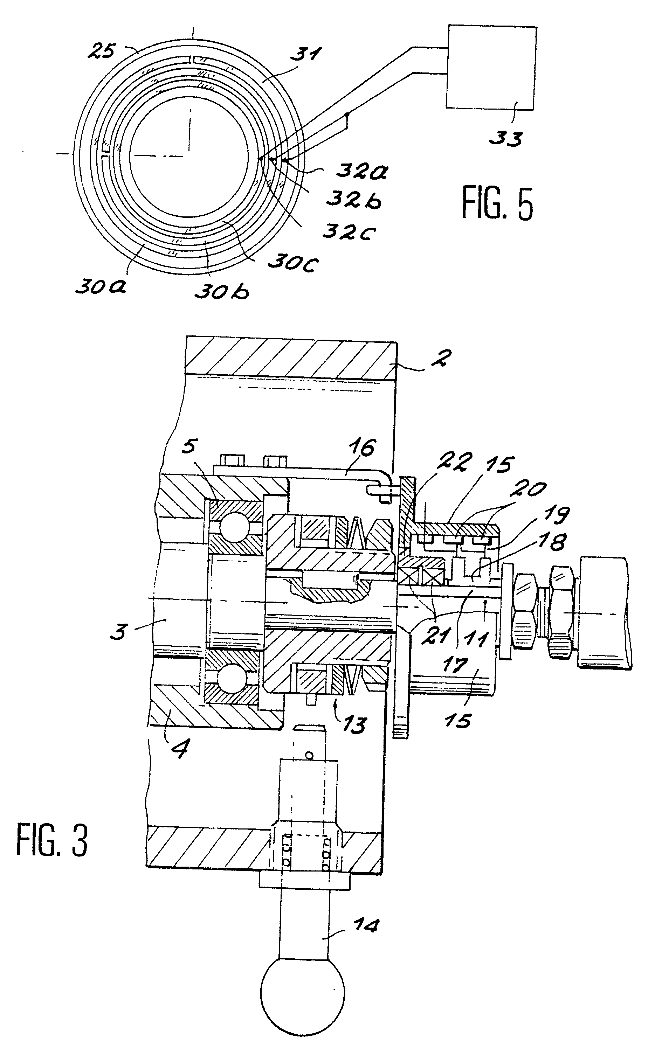

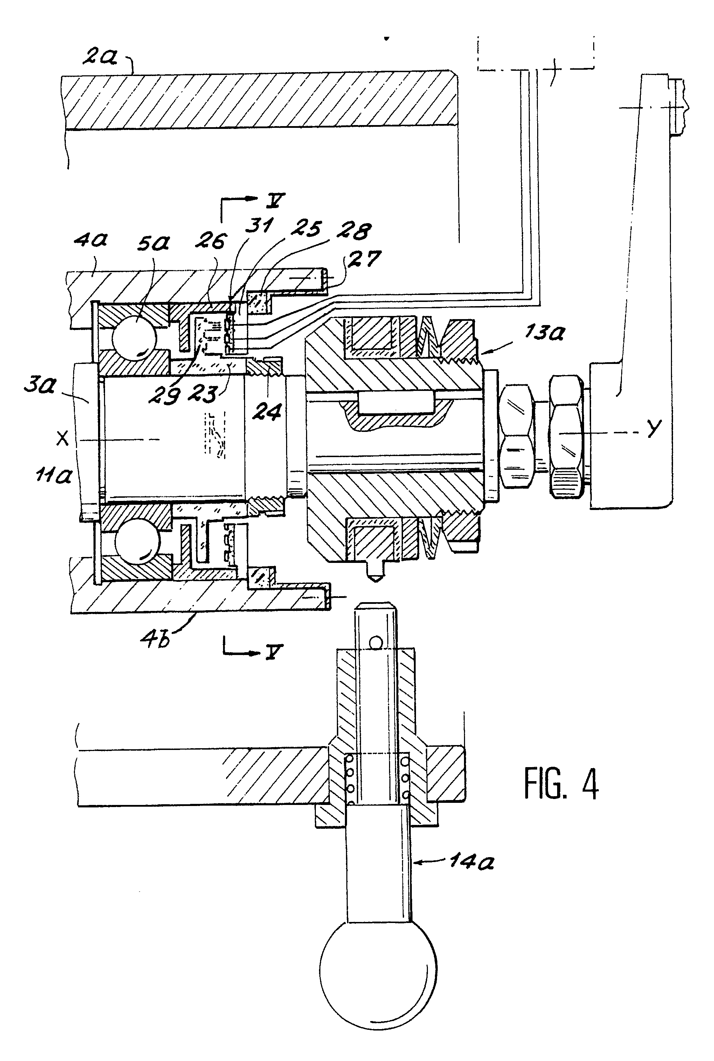

Par contre les moyens de détection qui sont prévus dans l'appareil selon l'invention et qui sont illustrés notamment sur la figure 4, répondent à une conception tout à fait différente, afin de réaliser un capteur potentiométrique extrêmement simple et peu coûteux, qui est néanmoins apte à donner entière satisfaction. A cet effet, ces moyens de détection sont complètement intégrés dans le présent dispositif au lieu d'être constitués par un capteur distinct, comme cela est le cas sur la figure 3.

Par ailleurs, l'appareil selon l'invention se différencie du précédent par le fait que le fourreau 4a de maintien de l'arbre rotatif correspondant 3a se prolonge au-delà du roulement 5a prévu à l'extrémité correspondante. C'est du reste l'existence de ce prolongement 4b qui permet d'intégrer les moyens de détection potentiométriques aux organes du présent appareil.

Ces moyens de détection comprennent deux pièces indépendantes l'une de l'autre et qui sont aptes à constituer le rotor et le stator du capteur potentiométrique correspondant. L'une de ces pièces consiste en un manchon 23 qui est emboîté et serré sur l'extrémité correspondante 11a de l'arbre 3a de façon à constituer le rotor du capteur potentiométrique correspondant. Ce manchon se trouve situé à l'intérieur du prolongement 4b du fourreau 4a et il est serré contre la cage du roulement 5a au moyen d'une bague vissée 24.

Quant au stator du capteur potentiométrique, il consiste en un disque 25 de contour circulaire dont le diamètre correspond au diamètre intérieur du prolongement 4b du fourreau 4a. Ce disque est ainsi centré sur l'axe de ce fourreau et il est rendu solidaire de celui-ci par serrage axial. Ce disque comporte une ouverture centrale à travers laquelle est engagé avec un certain jeu le manchon 23, ce qui permet à ce dernier de tourner à l'intérieur de cette ouverture.

Dans l'exemple représenté, le capteur potentiométrique ainsi constitué comprend en outre une troisième pièce. Celle-ci consiste en un boîtier 26 en forme de cuvette qui est également fixe comme le disque 25. Le fond de ce boîtier comporte une ouverture centrale similaire à celle du disque 25 et le manchon 23 est engagé à travers cette ouverture dans laquelle elle peut librement tourner. Dans un tel cas, le disque 25 constitue en quelque sorte le couvercle du boîtier 26. Ce boîtier et ce disque sont fixés en place par serrage axial au moyen d'une bride 27 avec interposition d'une rondelle élastique 28.

Le manchon interne 23 formant rotor comporte une collerette 29 dont une des faces se trouve disposée en regard de la face interne du disque 25. Les deux faces en regard portent alors respectivement les pistes résistives et les contacts du potentiomètre correspondant.

Dans le cas présent, il est prévu trois pistes résistives 30a, 30b et 30c qui sont portées par une rondelle 31 solidaire de la face interne du disque 25. Quant aux contacts placés contre ces pistes, ils consistent en des lamelles plastique 32a, 32b, 32c portées par la face correspondante de la collerette 29 du manchon 23. Ces contacts glissants sont par ailleurs reliés au circuit de mesure 33 du potentiomètre correspondant.

Il faut observer qu'une des pistes résistives comporte une interruption et que les curseurs sont disposés à angle droit afin de mesurer de position angulaire exacte de l'arbre 3a sans interruption.

Pour éviter que les lamelles élastiques constituant les contacts du potentiomètre risquent d'être déformées par écrasement, le manchon interne 23 comporte un épaulement 34 qui empêche que la rondelle 31 puisse être appliquée contre la collerette 29.

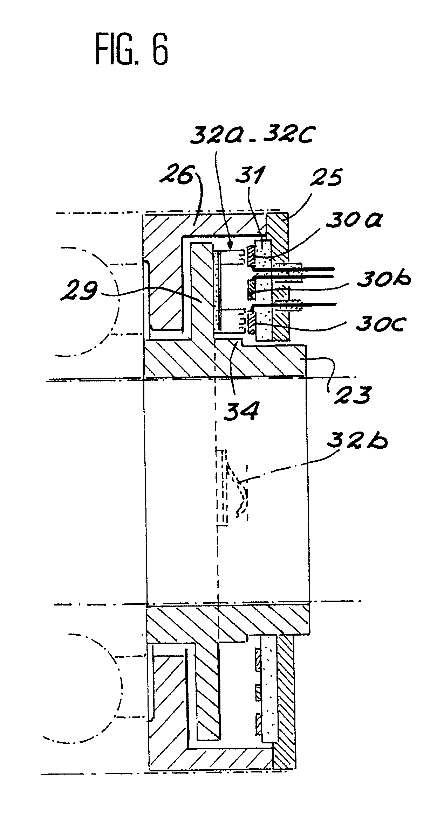

Bien que le capteur potentiométrique ainsi réalisé ne constitue pas un appareil se suffisant à lui-même, ses organes forment un ensemble cohérent représenté la figure 6 et dans lequel le boîtier 26 et le disque 25 assurent la protection des lamelles de contact et des pistes résistives. Ceci est un avantage important, car ceci évite tout risque de détérioration des éléments de ce capteur avant son intégration dans l'appareil de détection correspondant. Bien entendu, le capteur ainsi constitue forme en lui-même l'un des objets de la présente invention, en plus de l'appareil de détection de balourd dans son ensemble.

Il convient de noter que dans l'exemple de réalisation représenté à la figure 4, l'appareil de détection correspond à un appareil comportant un entraînement manuel de l'arbre rotatif 3a au moyen d'une manivelle 11a. Dans un tel cas, le dispositif 13a de freinage par friction est disposé au-delà du capteur potentiométrique 23-25 selon l'invention. En d'autres termes, ce capteur se trouve disposé entre le roulement 5a, prévu à l'extrémité correspondante et le dispositif 13a de freinage par friction.

Toutefois, l'appareil de détection selon l'invention pourrait tout aussi bien être du type dans lequel l'entraînement de l'arbre rotatif 3a est assuré par un moteur électrique.

Quant au capteur potentiométrique, il peut lui-même faire l'objet de différentes variantes. Ainsi dans le cas précédemment décrit, les pistes résistives sont disposées sur une surface perpendiculaire à l'axe de l'arbre rotatif 3a, mais ces pistes pourraient tout aussi bien être prévues sur la surface interne d'un corps cylindrique constituant le stator du capteur, auquel cas les lamelles de contact glissant seraient disposées à la périphérie de la collerette 29 portée par le manchon rotatif 23. Dans un tel cas, il serait en outre avantageusement prévu un couvercle fixe fermant le corps du capteur pour protéger les organes de celui-ci avant intégration dans l'appareil de détection correspondant. Mais de nombreuses autres variantes pourraient être envisagées. Ainsi dans le cas de la forme de réalisation selon la figure 4, le boîtier 26 pourrait être supprimé, auquel cas le disque fixe 25 serait remplacé par une pièce en forme de cuvette dont le fond servirait alors de support aux pistes résistives 30a, 30b, 30c. Bien entendu, dans toutes les formes de réalisation envisagées, la disposition des pistes résistives et des contacts correspondants pourrait être inversée, les pistes étant alors prévues sur le rotor alors que les contacts glissants le seraient sur le stator.

Ainsi qu'il a déjà été indiqué, le principal avantage des moyens de détection potentiométrique, prévus dans l'appareil de détection selon l'invention, réside en ce que ces moyens sont extrêmement simples et peu coûteux du fait même que le centrage des pièces correspondantes est assuré par l'intermédiaire de l'arbre rotatif de l'appareil lui-même et du manchon de maintien de cet arbre. Cette solution permet donc de réaliser un capteur potentiométrique de faible coût de revient. Du reste dans une forme de réalisation avantageuse, les pièces constituant ce capteur peuvent être réalisées par simple moulage en matière plastique, puisque ces pièces n'ont plus besoin de faire l'objet d'un usinage de précision pour assurer le centrage de celles-ci les unes par rapport aux autres.

**Revendications**

1. Appareil pour la détection du balourd d'une roue d'automobile en vue de l'équilibrage de celle-ci, comportant un arbre horizontal rotatif à l'intérieur d'un fourreau de maintien, monté sur des lames de ressort et contre lequel sont disposés des capteurs piezo-électriques, l'une des extrémités de cet arbre rotatif portant un plateau vertical destiné à recevoir la roue à contrôler, cependant que son extrémité opposée est accouplée à des moyens d'entraînement en rotation, et est associée à un capteur potentiométrique destiné à contrôler la vitesse de rotation de cet arbre et sa position angulaire, caractérisé en ce qu'à son extrémité opposée au plateau (10) de fixation d'une roue à contrôler, le fourreau (4a) de maintien de l'arbre rotatif (3a) se prolonge au-delà du roulement correspondant (5a) par une partie (4b) à l'intérieur de laquelle sont disposées deux pièces distinctes aptes à constituer le stator et le rotor du capteur potentiométrique de l'appareil, en l'occurrence :
- une pièce circulaire (25), fixée à l'intérieur du prolongement (4b) du fourreau (4) et dont le diamètre correspond au diamètre interne de celui-ci pour se trouver centrée sur l'axe de ce fourreau,
- un manchon (23) emboîté et fixé sur l'extrémité correspondante (11a) de l'arbre rotatif (3a), ce manchon étant engagé avec jeu à l'intérieur d'une ouverture centrale prévue dans la pièce (25) formant stator,
- les pistes résistives (30a, 30b, 30c) et les contacts correspondants (32a, 32b, 32c) du potentiomètre étant prévus sur des surfaces en regard, appartenant respectivement à ce manchon (23) et à la pièce (25) formant stator.

2. Appareil de détection selon la revendication 1, caractérisé en ce que le manchon interne (23), formant le rotor du capteur potentiométrique, porte une collerette (29) dont l'une des faces est disposée en regard d'un disque circulaire évidé (25) formant stator, les pistes résistives (30a, 30b, 30c) et les contacts correspondants étant prévus sur les faces ainsi situées en regard.

3. Appareil de détection selon la revendication 1 ou 2, caractérisé en ce que le capteur potentiométrique comprend une troisième pièce consistant en un boîtier fixe (26) en forme de cuvette dont le fond comporte une ouverture centrale traversée avec jeu par le manchon interne (23) formant rotor, auquel cas la pièce circulaire (25) formant stator constitue un couvercle pour ce boîtier.

4. Appareil de détection selon l'une des revendications précédentes, comportant un dispositif de freinage par friction qui est disposé sur l'extrémité de l'arbre rotatif opposée au plateau de fixation d'une roue à contrôler, caractérisé en ce que les pièces (23-25) constituant le capteur potentiométrique sont disposées entre le roulement (5a), prévu à l'extrémité correspondante de l'arbre rotatif (3a), et ce dispositif de freinage.

5. Capteur potentiométrique destiné à équiper un appareil de détection selon l'une des revendications précédentes, caractérisé en ce que ce capteur comprend trois pièces distinctes, à savoir :
- un manchon interne (23) destiné à servir de rotor et qui est apte à être engagé et centré sur l'extrémité correspondante (11a) de l'arbre rotatif (3a) d'un tel appareil de détection,
- un boîtier (26) en forme de cuvette adapté à être emboîté à l'intérieur du prolongement (4b) du fourreau (4a) de maintien de l'arbre rotatif (3a) de l'appareil,
- un disque (25) apte à constituer à la fois le stator du capteur potentiométrique et un couvercle pour le boîtier (26) de celui-ci, le diamètre externe de ce disque correspondant au diamètre interne du fourreau (4a) de maintien de l'arbre rotatif (3a), cependant

dant qu'il est prévu en son centre une ouverture à travers laquelle est engagé le manchon interne rotatif (23).

6. Capteur potentiométrique selon la revendication 5, caractérisé en ce que le manchon interne (23) formant stator comporte une collerette (29) dont l'une des faces est disposée en regard de la pièce circulaire (25) formant stator, les pistes résistives (30a, 30b, 30c) et les contacts correspondants (32a, 32b, 32c) étant prévus sur les faces ainsi situées en regard.

FIG. 1

FIG. 2

FIG. 5

FIG. 3

FIG. 4

FIG. 6

**Office européen
des brevets**

**RAPPORT DE RECHERCHE
EUROPEENNE**

Numéro de la demande

**EP 90 40 2233**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 196 039  (E.L. THEARLE) <br> * page 2, lignes 1-75 * <br> — — — | 1,5 | G 01 M 1/16 |
| A | DE-B-2 643 962  (FACOM, MORANGIS) <br> * revendications 1-16 * <br> — — — | 1,5 | |
| A,D | FR-A-2 619 214  (ETABLISSEMENTS M. MUELLER & CIE, S.A.) <br> * pages 4,5 * <br> — — — — — | 1 | |

|  | DOMAINES TECHNIQUES RECHERCHES (Int. Cl.5) |
|---|---|
|  | G 01 M 1/00 |

Le présent rapport de recherche a été établi pour toutes les revendications

| Lieu de la recherche | Date d'achèvement de la recherche | Examinateur |
|---|---|---|
| Berlin | 17 octobre 90 | DIETRICH A. |